**Europäisches Patentamt**

**European Patent Office**

**Office européen des brevets**

(11) Veröffentlichungsnummer: **0 128 408**
A2

(12) **EUROPÄISCHE PATENTANMELDUNG**

(21) Anmeldenummer: 84105802.7

(22) Anmeldetag: 21.05.84

(51) Int. Cl.³: **B 28 D 1/30,** B 23 Q 35/10

(30) Priorität: 04.06.83 DE 3320284

(43) Veröffentlichungstag der Anmeldung: 19.12.84
Patentblatt 84/51

(84) Benannte Vertragsstaaten: **AT BE CH FR IT LI NL**

(71) Anmelder: **Wesely, Dieter Ludwig, Ing.-Grad., Ensheimer Strasse 45a, D-6670 St. Ingbert/Saar (DE)**

(72) Erfinder: **Wesely, Dieter Ludwig, Ing.-Grad., Ensheimer Strasse 45a, D-6670 St. Ingbert/Saar (DE)**

(74) Vertreter: **Boecker, Carl Otto, Dipl.-Ing., Dr. Ehrhardt-Strasse 31, D-6670 St. Ingbert (Saar) (DE)**

(54) Steinplatten-Bearbeitungsmaschine zum Herstellen innerer und äusserer Konturen der Ränder von Steinplatten.

㉗ Steinplatten-Bearbeitungsmaschine zum Herstellen innerer und äußerer Konturen der Ränder von Steinplatten mittels Fingerfräser im Kopier-Fräsverfahren. Die an der Schablone abrollende Tastrolle ist positiv angetrieben und wird durch krafterzeugende Mittel so stark gegen die Schablone gedrückt, daß von der an der Tastrolle wirksamen Reibungskraft die erforderliche Vorschubkraft für das Fräswerkzeug aufgebracht wird. Der Werkzeughalter mit Antrieb sowie die Tastrolle mit Antrieb sind an einem Support angeordnet, der auf einem frei schwenkbaren Schwenkarm leichtgängig geführt ist, so daß Support und Schwenkarm von der sich abrollenden Tastrolle konturgerecht mitgeschleppt werden.

ACTORUM AG

- 1 -

Wes IV

Steinplatten-Bearbeitungsmaschine zum Herstellen innerer
und äußerer Konturen der Ränder von Steinplatten

Die Erfindung betrifft eine Steinplatten-Bearbeitungsmaschine zum Herstellen innerer und äußerer Konturen der Ränder von Steinplatten, die aus dekorativen Gründen oder im Hinblick auf die Zweckbestimmung gleichmäßig oder unregelmäßig gekrümmte innere und äußere Konturen haben. Steinplatten mit geraden Seitenkanten werden am wirtschaftlichsten durch Sägen zugeschnitten, jedoch wird das Sägen unwirtschaftlich, wenn durch mehrfache kurze Sägeschnitte gebogene äußere Konturen angeformt werden sollen, was im übrigen nur bei konvexen Krümmungen möglich ist. Zunehmend werden jedoch dekorativ gestaltete Steinplatten für Fußböden, Wände, Tischplatten oder dergleichen benötigt, die auch konkave Krümmungen aufweisen. Steinplatten mit inneren Konturen, d.h. mit inneren Ausschnitten, konnten bisher lediglich durch sich überdeckende Bohrlöcher hergestellt werden, wonach die innere Kontur durch Schleifen geglättet werden mußte. Solche Steinplatten mit inneren Ausschnitten werden zunehmend benötigt für hochwertige Waschtischplatten, Spültischplatten oder dergleichen, insbesondere aus Marmor oder Granit.

Der Erfindung liegt die Aufgabe zugrunde, eine Steinplatten-Bearbeitungsmaschine zum Herstellen innerer und äußerer Konturen der Ränder von Steinplatten zu schaffen, die es ermöglicht, auf einfache Art und Weise und in einem Arbeitsgang von der Geraden abweichende äußere Konturen sowie innere Konturen herzustellen, wobei unter der Herstellung von

...

Konturen auch das Trennschneiden umfaßt wird. Die Lösung dieser Aufgabe besteht aus den Merkmalen des Patentanspruches 1.

Die Steinplatten-Bearbeitungsmaschine gemäß der Erfindung ist praktisch eine Kopier-Fräsmaschine zur Ausführung von Trennschnitten oder zum Herstellen der Kontur von Steinplatten, die durch Sägeschnitte vorprofiliert sind. Die Besonderheit liegt darin, daß der konturgerechte Vorschub des rotierenden Fräswerkzeuges, vorzugsweise eines Fingerfräsers, nicht nur, wie in der Technik allgemein bekannt, durch das Abrollen einer Tastrolle an einer Schablone gesteuert wird, sondern daß ein Drehantrieb für die Tastrolle im Verein mit einem krafterzeugenden Mittel zur Aufbringung einer Reibungskraft zwischen der Tastrolle und der Schablone auch die Vorschubkraft aufbringt, die erforderlich ist, daß das rotierende Fräswerkzeug seine konturgerechte Fräsarbeit, d.h. in einem Arbeitsgang, ausführen kann. Um diese Vorschubkraft durch die krafterzeugenden Mittel voll zum Einsatz zu bringen, sind ein Schwenkarm mit längsbeweglichem Support besonders leichtgängig gelagert bzw. geführt, so daß diese maschinentechnisch bedingten Teile möglichst wenig Reibungskraft verbrauchen, wenn sie in ihren Freiheitsgraden durch die sich an der Schablone abrollende Tastrolle in gegebenenfalls zusammengesetzten Bewegungen konturgerecht mitgeschleppt werden.

Die einfachste Ausführungsform für das krafterzeugende Mittel zur Erzeugung eines schlupffreien Kontaktes zwischen der angetriebenen Tastrolle und der Schablone besteht aus einer Zugfeder nach dem Patentanspruch 2. Es bedarf lediglich des Einsatzes von Zugfedern zwischen dem Support und/ oder dem freien Ende des Schwenkarmes einerseits und an ortsfeste Widerlager andererseits, um je nach der zu erwartenden Fräsrichtung die erforderliche Vorschubkraft für das Fräswerkzeug im Verein mit der von der Tastrolle erzeugten Reibungskraft aufzubringen.

...

Die Bedienung der Steinplatten-Bearbeitungsmaschine gemäß der Erfindung wird vereinfacht, wenn nach Patentanspruch 3 das krafterzeugende Mittel aus einem doppelt beaufschlagbaren waagerechten Druckmittel-Zylinder, vorzugsweise einem Luftzylinder, besteht. Hierbei braucht die Kraftrichtung der Kolbenstange lediglich durch Umsteuern des Druckmittels gewählt zu werden, je nach dem ob die Tastrolle gegen eine äußere Kontur der Schablone gezogen oder gegen eine innere Kontur der Schablone gedrückt werden muß.

Das krafterzeugende Mittel kann nach Patentanspruch 4 auch darin bestehen, daß die Tastrolle eine Magnetrolle ist, wobei die Schablone aus Stahl besteht. Die Magnetisierung der Tastrolle muß so stark sein, daß ein schlupffreier Kontakt zwischen der angetriebenen Tastrolle und der Schablone in Abhängigkeit von der gewünschten Vorschubkraft am Werkzeug sichergestellt ist.

Um aus einer Steinplatte eine Öffnung auszuschneiden und konturgerecht zu bearbeiten, ist es erforderlich, vor dem Fräsen zumindest ein Loch zu bohren. Hierzu ist es erforderlich, daß nach dem Einsetzen eines Bohrwerkzeuges in den Werkzeugträger der Werkzeugträger am Support oder der Schwenkarm an seiner Stütze senkrecht verstellbar ist. Selbstverständlich müssen beim Fräsen sowohl der Werkzeugträger als auch der Schwenkarm in senkrechter Richtung fixiert werden können.

0128408

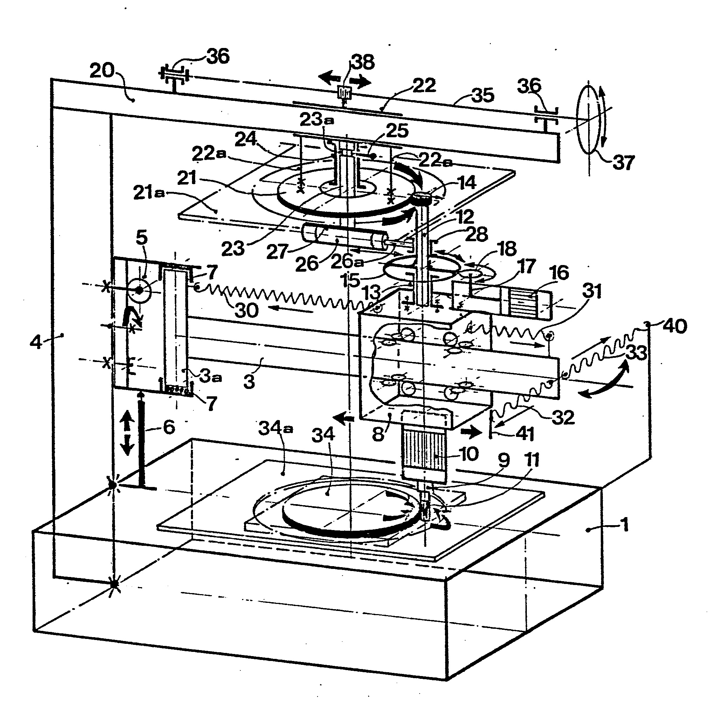

In der Zeichnung ist eine Steinplatten-Bearbeitungsmaschine gemäß der Erfindung schaubildlich und schematisch dargestellt. Man erkennt einen Aufspanntisch 1, über dem sich ein waagerechter Schwenkarm 3 erstreckt, der über eine senkrechte Schwenkwelle 3 mittels Wälzlagern 7 leichtgängig in einem Schlitten 5 schwenkbar gelagert ist, der seinerseits an einer seitlichen Stütze 4 höhenverstellbar geführt ist. Zur Einstellung der Höhenlage des Schwenkarmes 3 dient ein Hubzylinder 6. Auf dem Schwenkarm ist ein Support 8 ebenfalls leichtgängig längsbeweglich geführt, an dem ein Werkzeugträger 9 mit Werkzeugantrieb 10 nach unten gerichtet angeordnet ist. Im Ausführungsbeispiels besteht das Werkzeug aus einem Fingerfräser 11.

Oberhalb des Supportes 8 ist eine Tastrollenwelle 11 in einem mit dem Support verbundenen Lager 13 drehbar geführt, an deren oberen Ende eine Tastrolle 14 angeordnet ist. Die Tastrollenwelle 12 hat keine Verbindung zum Inneren des Supportes 8, trägt jedoch eine Antriebsrad 15 mit Außenverzahnung, das auch zu Einstellzwecken zusätzlich als Handrad ausgebildet sein kann. Der Antrieb der Tastrollenwelle 12 und damit der Tastrolle 14 erfolgt über einen Antriebsmotor 16, ein Winkelgetriebe 17 sowie ein Antriebsritzel 18.

Vom oberen Ende der Stütze 4 aus erstreckt sich über dem Aufspanntisch 1 ein Überbau 20, an dem ein Tragschlitten 22 waagerecht geführt ist. Von dem Tragschlitten 22 gehen Aufhängestangen 22a zur Befestigung einer Schablone 21 aus. Die Schablone 21 hat im Ausführungsbeispiel eine kreisrunde Außenkontur, um danach eine auf dem Aufspanntisch 1 liegende kreisrunde Steinplatte 34 herzustellen. Strichpunktiert ist zusätzlich eine Schablone 21a eingezeichnet, wenn eine Steinplatte 34a mit kreisrunder Innenkontur hergestellt werden sollte.

Unterhalb des Tragschlittens 22 erstreckt sich eine Tragsäule 23 innerhalb einer an dem Tragschlitten 22 befestigten Steckhülse 24. Die Tragsäule 23 hat eine Eindrehung 23a zum Einführen eines Arretierungsbolzens 25, der die an sich lösbare Tragsäule 23 in der Steckhülse 24 festhält. Am unteren Ende ist die Tragsäule 23 mit einer Befestigung 27 für einen sich waagerecht erstreckenden Druckmittel-Zylinder 26 versehen, dessen Kolbenstange 26 an ein die Tastrollenwelle 12 umschließendes Lager 28 angeschlossen ist. Der Druckmittel-Zylinder 26 erstreckt sich radial zur Achse der Tragsäule 23 und ist mit dieser in waagerechter Ebene frei drehbar.

Wenn nach der kreisrunden Schablone 21 eine ebensolche Steinplatte hergestellt werden soll, wird als Rohling eine durch Sägeschnitte vorgeformte Platte auf den Aufspanntisch 1 aufgelegt und durch nicht dargestellte Mittel befestigt. Daraufhin wird bei laufendem Antriebsmotor 10 und rotierendem Fingerfräser 11 der Druckmittelzylinder 26 auf Einziehen seiner Kolbenstange 26a beaufschlagt, wodurch die Tastrolle 14 gegen die Schablone 21 gezogen wird. Die von dem Druckmittel-Zylinder 26 vermittelte Reibungs-kraft zwischen der umlaufenden Tastrolle 14 und der Schablone 21a ist so groß, daß nicht nur der Support 8 und der Schwenkarm 3 in einer zusammengesetzten Bewegung auf einem Kreisbogen konturgerecht mitgeschleppt werden, sondern daß auch die notwendige Vorschubkraft für den der Kontur der Schablone folgenden Fingerfräser 11 aufgebracht wird. Der Druckmittelzylinder 26 folgt der Kreisbewegung der Tastrolle 14 mit Tastrollenwellen 12, Support 3 und Fingerfräser 11, da seine Tragsäule 23 frei drehbar ist. Wenn eine Steinplatte 34 a mit Innenkontur bearbeitet werden soll, wird der Druckmittelzylinder 26 auf Ausfahren seiner Kolbenstange 26a beaufschlagt, um die Tastrolle 14 in Reibungsschluß mit der Innenkontur der Schablone 21 zu bringen.

Je nach dem Verlauf der Kontur einer Schablone ist es denkbar, daß die von dem Druckmittelzylinder 26 ausgeübte, stets radial zur Mitte der Tragsäule 23 gerichtete Zug- oder Druckkraft nicht ausreicht, um die erforderliche hohe Reibungskraft zwischen Tastrolle und Schablone zu erzeugen, dann nämlich, wenn die Richtung der erforderlichen Vorschubkraft wesentlich von der Normalen zur Richtung der Zug- bzw. Druckkraft des Druckmittel-Zylinders 26 abweicht. Es empfiehlt sich dann als krafterzeugende Mittel zur Herstellung der Vorschubkraft Zugfedern einzusetzen, und zwar eine Zugfeder 30 zwischen dem Support 8 und dem senkrecht verstellbaren Schlitten 5 oder eine Zugfeder 31 zwischen dem Support und dem Ende des Schwenkarmes 3, wenn eine Vorschubkraft-Komponente in Richtung des Schwenkarmes (nach innen oder nach außen) benötigt wird. Ebenso kann über Zugfedern 32, 33 zwischen dem Schwenkarm 3 einerseits und ortsfesten Widerlagern 40, 41 andererseits wahlweise eine Vorschubkraft-Komponente in Schwenkrichtung des Schwenkarmes 3 (rechtsdrehend oder linksdrehend) erzeugt werden. Unter Umständen muß ausschließlich mit Federkräften gearbeitet werden, wozu dann der Druckmittelzylinder 26 mit seiner Tragsäule 23 unter Ziehen des Arretierungsbolzenes 25 demontiert wird.

Der Tragschlitten 22 ist auf seiner Führung am Überbau 20 über eine Gewindespindel 35, die in Lagern 36 auf em Überbau 20 gelagert und mit einem Handrad 37 versehen ist, verstellbar. Hierzu trägt der Tragschlitten 22 eine feststehende Mutter 38.

PATENTANWALT DIPL.-ING. C. O. BOECKER

6670 ST.INGBERT (SAAR), ENSHEIMERSTR. 4B

Wes IV

PATENTANSPRÜCHE

1. Steinplatten-Bearbeitungsmaschine zum Herstellen innerer und äußerer Konturen der Ränder von Steinplatten, gekennzeichnet durch,

a) einen Aufspanntisch (1) zur Aufnahme der durch Sägen vorprofilierten Steinplatte (34),

b) einen den Aufspanntisch übergreifenden, waagerechten Schwenkarm (3), der an einer senkrechten Stütze (4) über Wälzlager (7) leichtgängig schwenkbar gelagert ist,

c) einen Support (8), der auf dem Schwenkarm über Längslager leichtgängig längsbeweglich geführt ist,

d) einen am Support angebrachten Werkzeugträger (9) mit Antrieb (10) für ein rotierendes Bohr- oder Fräswerkzeug (11) mit senkrechter Antriebsachse,

e) eine am Support über eine senkrechte Welle (12) drehbar gelagerte, fliegend angeordnete Tastrolle (14) mit einem Handrad und/oder einem motorischen Antrieb (16, 17, 18) zum Drehen der Welle mit Tastrolle, die über die obere Kontur des Supports hinausragt,

f) einen am Aufspanntisch abgestützten Überbau (20) zum Befestigen einer in Wirkebene der Tastrolle befindlichen Schablone (21), die der gewünschten Kontur der zu bearbeitenden oder auszuschneidenden Steinplatte (34) entspricht,

g) und durch ein krafterzeugendes Mittel (26; 30,31; 32, 33;) zur Aufbringung einer Reibungskraft zwischen der drehbar angetriebenen Tastrolle und der Schablone von derartiger Größe, daß nicht nur der Support und/oder der Schwenkarm durch das Abrollen der Tastrolle an der Schablone in ihren Freiheitsgraden konturgerecht mitgeschleppt werden, sondern auch die notwendige Vorschubkraft für das der Kontur der Schablone folgende Fräswerkzeug durch die an der Tastrolle wirksame Reibungskraft aufgebracht wird.

2. Steinplatten-Bearbeitungsmaschine nach Anspruch 1,
dadurch gekennzeichnet,
daß das krafterzeugende Mittel aus je einer Zugfeder (30, 31; 33, 34) besteht, die an den Support (8) und/ oder an das freie Ende des Schwenkarmes sowie an ortsfeste Widerlager (40,41) wahlweise anschließbar ist je nach dem, in welche Richtung sich Support und/oder Schwenkarm in ihren Freiheitsgraden konturgerecht bewegen müssen.

3. Steinplatten-Bearbeitungsmaschine nach Anspruch 1,
dadurch gekennzeichnet,
daß das krafterzeugende Mittel aus einem doppelt beaufschlagbaren waagerechten Druckmittel-Zylinder (26) besteht, dessen Kolbenstange (26a) an der supportseitigen Lagerung (28) für die Tastrollenwelle (12) anschließbar ist und dessen Zylinder um eine senkrechte, innerhalb der Schablone angeordnete ortsfeste Achse (23) in waagerechter Ebene frei schwenkbar ist.

4. Steinplatten-Bearbeitungsmaschine nach Anspruch 1,
dadurch gekennzeichnet,
daß das krafterzeugende Mittel darin besteht, daß die Tastrolle eine Magnetrolle ist, wobei die Schablone aus Stahl besteht.

5. Steinplatten-Bearbeitungsmaschine nach Anspruch 1,
dadurch gekennzeichnet,
daß zum Bohren von Löchern mittels eines Bohrwerkzeuges der Werkzeugträger am Support oder der Schwenkarm an seiner Stütze senkrecht verstellbar ist.

0128408

1/1